# EUROPEAN PATENT SPECIFICATION

(11) **EP 3 099 754 B1**
(45) Date of publication and mention of the grant of the patent: **16.01.2019**
(21) Application number: 15702231.0
(22) Date of filing: 30.01.2015
(51) Int. Cl.: C09D 123/08, C09D 133/02, B41M 5/52

(54) **AQUEOUS PRIMER COATING FOR USE IN DIGITAL PRINTING**
WÄSSRIGE GRUNDIERUNGSZUSAMMENSETZUNG ZUR VERWENDUNG IN EIMEM DIGITALEN DRUCKVERFAHREN
REVÊTEMENT D'IMPRESSION DE TYPE AQUEUX UTILISABLE DANS UN PROCÉDÉ D'IMPRESSION NUMÉRIQUE

(30) Priority: 31.01.2014 EP 14153547
(43) Date of publication of application: 07.12.2016
(73) Proprietor: Trüb Emulsions Chemie AG, 8262 Ramsen (CH)
(72) Inventor: WORBS, Thilo, Alexander, 78244 Gottmadingen (DE); TRÜB, Dominic, Ph., CH-8260 Stein am Rhein (CH); TRÜB, Peter, CH-8262 Ramsen (CH)
(74) Representative: Schmitz, Joseph
(86) International application number: PCT/EP2015/051873
(87) International publication number: WO 2015/114070

(56) References cited:
- US-A1- 2005 245 651

## Description

### TECHNICAL FIELD

The present invention relates to aqueous primer coatings for use on print substrates, and more particularly for enhancing the image quality of the substrates to be printed in a digital printing process.

### PRIOR ART

Almost 600 years after Johannes Gutenberg invented the original printing press, innumerable methods of printing have been developed and commercialised. In recent years, the wide-spread adoption of the latest development in printing technology, known as "on-demand digital printing", has prompted a shift in the requirements of the print substrates because of the particular inks and toners used in the digital printing process. In the digital printing process, also known as electrophotographic printing process, liquid toner images are formed on a photosensitive drum and then electrically transferred onto an intermediate transfer blanket or belt for deposition of the toner image on the print substrate. Print substrates can be cellulose-based such as paper or may be polymer-based such as biaxially oriented polypropylene film.

However, for all the advantages that modern digital printing can offer, it nonetheless suffers from two significant drawbacks.

Firstly, the liquid toners do not sufficiently adhere to the print substrates unless the print substrates have been pre-coated with a primer coating increasing the adhesion of the deposited image to the print substrate. A number of primer coatings have been developed to address the adhesion problem, which particularly occurs when the print substrate is of polymeric nature, e.g. a polypropylene film. For example, solutions of polyamide resin have been known to serve as primer coatings, but the fact that the solvents used are most often volatile organic components (VOC) poses environmental problems and security concerns due to the flammable vapors, in addition of raising the cost of such primer coatings.

EP 2253684 describes a primer coating chiefly made of an aqueous dispersion of an ethylene-acrylic or ethylene-methacrylic copolymer, which has been supplemented by an adhesion enhancer in order to provide sufficient adhesion of the primer coating to polymer print substrates. Such adhesion enhancers are chosen among polyurethanes, rosin and esters thereof and amorphous acrylic polymers. However, the used adhesion enhancers lead to another issue. The adhesion enhancers increase the likelihood of the primed substrate adhering to itself when rolled up or stacked for storage because of theirs important hot tack, which is why anti-blocking agents are further needed to compensate for this unwanted adhesion.

WO2011/100379 discloses an primer coating capable of being run at higher speeds and that comprises a ternary mix of natural rosin dispersion, dispersion of a copolymer of ethylene and (meth)acrylic acid and protective colloid forming material.

EP 1769042 discloses a primer coating chiefly comprising a ternary mix of an ethylene-(meth)acrylic acid copolymer dispersion, an polyurethane-based adhesion promoter dispersion and a metal hydroxide anti-blocking agent. Again, as with EP 2253684, the need to carefully dose the antagonistic adhesion promoter and the anti-blocking agent renders the use of such primer coatings unpractical.

Secondly, because of the requirement of priming the print substrate with primer coating to achieve a better adhesion of the toner to the print substrate, the quality of the print can suffer due to the presence of the afore-mentioned adhesion enhancers or anti-blocking agents in combination with the intense heat the primer and liquid toner are subjected to fixate the image. For instance, bleaching and/or bleed of the deposited liquid toner or the deposited ink can occur.

Thus it is therefore desirable to provide primer coatings that are free of adhesion promoters such as for example polyurethane, rosin esters or anti-blocking agents that can interfere with the quality of the print at temperatures above 90°C, and which simultaneously benefit from good adhesion to both the liquid toner and the print substrate.

### SUMMARY OF THE INVENTION

The present invention provides for a polyurethane-free, aqueous primer coating for print substrates, as defined in claim 1, that exhibits good adhesion to both the print substrate and the toner or ink, while at the same time being essentially free of adhesion promoters interfering with print quality. The aqueous primers of the present invention are polyurethane-free, aqueous primer coatings for print substrates comprising a dispersion of an at least partially neutralized copolymer of ethylene and (meth)acrylic acid, a dispersion of an at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide.

The primer coating for print substrates of the present invention further allows to limit the spread of liquid inks or toners on the primed print substrate, thus allowing the print substrate to be printed at higher line resolution in halftone mode by applying finer dots and more regular dots.

Further embodiments of the invention are laid down in the dependent claims.

### DESCRIPTION OF PREFERRED EMBODIMENTS

In the context of the present invention, the term "(meth)acrylic acid" refers to both acrylic acid and methacrylic acid. Likewise, the term "methyl (meth)acrylate" refers to both methyl acrylate and methyl methacrylate.

In the context of the present invention, the term "polyurethane-free" refers to a composition comprising less than 0.01 percent by weight of polyurethane.

In the context of the present invention, the term "alkenyl phosphate ester" refers to an ester of phosphoric acid and an α, β-ethylenically unsaturated alkene capable of forming an ester with phosphoric acid.

The compositions of the present invention are polyurethane-free, aqueous primer coatings for print substrates comprising a dispersion of an at least partially neutralized copolymer of ethylene and (meth)acrylic acid and a dispersion of an at least partially neutralized copolymer that is obtained by emulsion copolymerization of at least methyl (meth)acrylate and one or more alkenyl phosphate esters and further optionally one or more comonomers chosen from (meth)acrylic acid and diacetone (meth)acrylamide.

In a preferred embodiment, the compositions of the present invention are preferably polyurethane-free, aqueous primer coatings for print substrates comprising a dispersion of an at least partially neutralized copolymer of ethylene and (meth)acrylic acid, a dispersion of an at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and a dispersion of an at least partially neutralized amorphous copolymer of styrene and (meth)acrylic acid.

The aqueous primer coating according to the present invention is a mixture of several copolymer dispersions in water.

The aqueous primer coating according to the present invention has preferably a pH in excess of 8, preferably in excess of 8.5 or of from 8.5 to 10. At a pH that is below 8, the aqueous primer coating may start gelling and may then become more difficult or even impractical to handle in a printing press. The pH may be controlled by the addition of ammonia or derivatives thereof such as for example dimethyl ethanolamine during to the mixing of the separate copolymer dispersions comprised in the aqueous primer coating.

The Brookfield viscosity of the aqueous primer coating may be of from 150 to 350 mPas, preferably of 225 to 275 mPas, when measured at 20°C with spindle #2 at 100 rpm according to ASTM D2196-05.

The aqueous primer coatings of the present invention can be applied by many different methods to the print substrates to be primed. The coating method includes atomizing, brush coating, roll coating, dip coating, doctor blade coating, dipping, spraying, knife coating and such. Since each coating method requires a certain degree of viscosity to achieve best results, the viscosity of the aqueous primer coating may be fine-tuned by the addition of more or less water, depending on the specific needs of the coating process or by the addition of additives such as thickening agents.

The print substrates to which the primer coatings of the present invention can be applied may be chosen from metal-based substrates, cellulose-based substrates and polymer-based substrates. Exemplary metal substrates can be any kind of sheet or foil metal, in particular aluminum sheets or foil. Exemplary cellulose-based substrates can be cardboard, laminated cardboard, paper such as wood-free paper. Polymer-based substrates can be single layer or multilayer polymer films of polyethylene, polypropylene, polyethylene terephthalate, polyamide, ethylene (meth)acrylic acid copolymer, polylactic acid, and biaxially oriented films thereof. Other polymer-based substrates may be metallized polymer films.

The primer coating according to the present invention comprises a dispersion of an at least partially neutralized copolymer of ethylene and (meth)acrylic acid, where the solids content of said dispersion of a copolymer of at least partially neutralized ethylene and (meth)acrylic acid is preferably 35%. Preferably the at least partially neutralized copolymer of ethylene and (meth)acrylic acid is a copolymer of ethylene and acrylic acid. In the case where the primer coating according to the present invention comprises at least partially neutralized copolymer of ethylene and (meth)acrylic acid and at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, the at least partially neutralized copolymer of ethylene and (meth)acrylic acid, is present in 55 to 75 weight percent, more preferably in 65 to75 weight percent in dry weight, based on total dry weight of the at least partially neutralized copolymer of ethylene and (meth)acrylic acid, the at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and the at least partially neutralized amorphous copolymer of styrene and (meth)acrylic acid.

In the case where the primer coating according to the present invention comprises at least partially neutralized copolymer of ethylene and (meth)acrylic acid, at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and at least partially neutralized amorphous copolymer of styrene and (meth)acrylic acid, the at least partially neutralized copolymer of ethylene and (meth)acrylic acid, is present in 50 to 75 weight percent, more preferably in 60 to 70 weight percent in dry weight, based on total dry weight of the at least partially neutralized copolymer of ethylene and (meth)acrylic acid, the at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and the at least partially neutralized amorphous copolymer of styrene and (meth)acrylic acid.

Suitable dispersions of the copolymer of at least partially neutralized ethylene and (meth)acrylic acid may be prepared by heating the solid copolymer with a water phase in the presence of a base such as ammonia or derivatives thereof; or an alkaline or earth alkaline metal hydroxide solution such that the base forms a salt with the carboxylic acid groups of the copolymer, and upon heating and melting in an aqueous medium forms a colloidal dispersion. Preferably the base is ammonia or derivatives thereof having a boiling point between 50 to 130°C. When the base has a boiling point between 50 to 130°C, the base at least partially neutralizing the copolymer will evaporate during the digital printing upon transferring the toner image from the printer blanket under normal operating temperature (95 to 140 °C) to the print substrate, thus yielding a primer coating that is more water resistant when compared to the primer coating comprising hygroscopic alkali or earth alkali counter ions.

Copolymers of ethylene and (meth)acrylic acid show acceptably good transfer of the toner image onto the print substrate, and they generally display sufficient adhesion to ethylene polymers and ethylene copolymer print substrates. This is attributable to the fact that most toners comprise a binder component based on copolymers of ethylene and (meth)acrylic acid, in particular on copolymers of ethylene and acrylic acid.

The copolymers of ethylene and (meth)acrylate suitable for preparing the dispersion are preferably chosen from copolymers of ethylene and (meth)acrylate having a melt index of from 300 to 2000, preferably of from 1000 to 1500, when measured according to ASTM D1238 at 190°C using a weight of 2.16 kg.

The copolymers of ethylene and (meth)acrylate suitable for preparing the dispersion are preferably chosen from copolymers of ethylene and (meth)acrylate having a (meth)acrylic acid content of from 5 to 35 weight percent and an ethylene content of from 95 to 65 weight percent, preferably a (meth)acrylic acid content of from 15 to 25 weight percent and an ethylene content of from 75 to 85 weight percent. Said copolymers of ethylene and (meth)acrylate are particularly suitable for dispersion in aqueous media and are suitable as the main constituent of the primer compositions according to the invention.

The at least partially neutralized copolymer of ethylene and (meth)acrylic acid can be neutralised with a suitable base which may be chosen from metal hydroxides or organic bases such as ammonia or alkylated derivatives thereof, such as for example primary, secondary or tertiary amines. Most preferably the base for at least partially neutralizing the copolymer of ethylene and (meth)acrylic is ammonia or an aqueous solution thereof.

Suitable copolymer of ethylene and (meth)acrylic acid may be commercially obtained from various manufacturers.

The primer coating according to the present invention may also comprise a dispersion of a copolymer of at least partially neutralised amorphous copolymer of styrene and (meth)acrylic acid, where the solids content of said dispersion is preferably 40%. Preferably, the at least partially neutralised amorphous copolymer of styrene and (meth)acrylic acid is a copolymer of styrene and acrylic acid.

The at least partially neutralised copolymers of styrene and (meth)acrylic acid suitable for preparing the dispersion are preferably chosen from at least partially neutralised amorphous copolymers of styrene and (meth)acrylic acid having a weight average molecular weight of from 7500 to 9500, preferably of from 8000 to 9000.

The at least partially neutralised copolymers of styrene and (meth)acrylic acid suitable for preparing the dispersion are preferably chosen from at least partially neutralised amorphous copolymers of styrene and (meth)acrylic acid having a density of from 1.05 to 1.2 g/cm³.

The at least partially neutralised copolymers of styrene and (meth)acrylic acid suitable for preparing the dispersion are preferably chosen from at least partially neutralised amorphous copolymers of styrene and (meth)acrylic acid having an acid number of from 150 to 250, preferably of from 200 to 225.

The at least partially neutralized copolymer of styrene and (meth)acrylic acid can be neutralized with a suitable base which may be chosen from metal hydroxides or organic bases such as ammonia or alkylated derivatives thereof, such as for example primary, secondary or tertiary amines. Most preferably the base for at least partially neutralizing the copolymer of styrene and (meth)acrylic acid is ammonia or an aqueous solution thereof.

In the case where the primer coating according to the present invention comprises at least partially neutralized copolymer of ethylene and (meth)acrylic acid, at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, **and** at least partially neutralized amorphous copolymer of styrene and (meth)acrylic acid, the at least partially neutralized copolymer of styrene and (meth)acrylic acid is present in 10 to 30 weight percent, more preferably in 15 to 25 weight percent in dry weight, based on total dry weight of the at least partially neutralized copolymer of ethylene and (meth)acrylic acid, the at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and the at least partially neutralized amorphous copolymer of styrene and (meth)acrylic acid.

The primer coating according to the present invention comprises a dispersion of an at least partially neutralized copolymer of methyl (meth)acrylate and one or more alkenyl phosphate esters and further optionally one or more comonomers chosen from (meth)acrylic acid and diacetone (meth)acrylamide, where the solids content of said dispersion is preferably 29%.

The at least partially neutralized copolymer obtained by emulsion copolymerization can be neutralized with a suitable base which may be chosen from metal hydroxides or organic bases such as ammonia or alkylated derivatives thereof, such as for example primary, secondary or tertiary amines. Most preferably the base for at least partially neutralizing the copolymer obtained by emulsion copolymerization is ammonia or an aqueous solution thereof.

In the case where the primer coating according to the present invention comprises at least partially neutralized copolymer of ethylene and (meth)acrylic acid and at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, the at least partially neutralized copolymer that is obtained by emulsion copolymerisation is present in 25 to 45 weight percent, more preferably in 25 to 35 weight percent in dry weight, based on total dry weight of the at least partially neutralized copolymer of ethylene and (meth)acrylic acid, the at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and the at least partially neutralized amorphous copolymer of styrene and (meth)acrylic acid.

In the case where the primer coating according to the present invention comprises at least partially neutralized copolymer of ethylene and (meth)acrylic acid, at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, **and** at least partially neutralized amorphous copolymer of styrene and (meth)acrylic acid, the at least partially neutralized copolymer that is obtained by emulsion copolymerisation is present in 10 to 30 weight percent, more preferably in 15 to 25 weight percent in dry weight, based on total dry weight of the at least partially neutralized copolymer of ethylene and (meth)acrylic acid, the at least partially neutralized copolymer that is obtained by emulsion copolymerisation of at least methyl (meth)acrylate and one or more alkenyl phosphate esters and further optionally one or more comonomers chosen from (meth)acrylic acid and diacetone (meth)acrylamide, and the at least partially neutralized amorphous copolymer of styrene and (meth)acrylic acid.

Methods for obtaining copolymers by emulsion copolymerization are known in the art. In general, a predetermined quantity of at least two types of monomer is combined with water and a surfactant. The copolymeristaion reaction is then initiated by the addition of a initiator, such as for example ammonium peroxodisulfate, and left to proceed for a predetermined time until the copolymerisation is stopped by quenching or by a drop in temperature. The emulsion copolymers useful in the aqueous primer coatings of the present invention, the emulsion copolymerisation is preferably stopped by adjusting the pH to a pH in excess of 7, preferably of between 7,5 - 7,9 and subsequently dropping the temperature to about 30°C.

In order to obtain the dispersion of the at least partially neutralized copolymer obtained by emulsion copolymerization, the emulsion copolymerization is carried out in the presence of at least methyl (meth)acrylate and one or more alkenyl phosphate esters, and further optionally one or more comonomers chosen from (meth)acrylic acid and diacetone (meth)acrylamide.

In a preferred embodiment, the emulsion copolymerization is carried out in the presence of at least methyl methacrylate and one or more alkenyl phosphate esters, and further optionally one or more comonomers chosen from (meth)acrylic acid and diacetone (meth)acrylamide.

In particular, in order to obtain the dispersion of the at least partially neutralized copolymer obtained by emulsion copolymerization, the emulsion copolymerization may be carried out in the presence of at least methyl (meth)acrylate, one or more alkenyl phosphate esters and one or more comonomers chosen from (meth)acrylic acid and diacetone (meth)acrylamide, and preferably in the presence of 100 parts by weight of methyl (meth)acrylate, 10 to 15 parts of one or more alkenyl phosphate esters, and 10 to 15 parts of (meth)acrylic acid and/or of 5 to 8 parts of diacetone (meth)acrylamide. This particular combination of three or four monomers yields a dispersion that confers excellent print quality to the primed print substrate.

In a preferred embodiment, the dispersion of the at least partially neutralized copolymer obtained by emulsion copolymerisation is obtained by emulsion copolymerization of methyl (meth)acrylate and one or more alkenyl phosphate esters, where suitable alkenyl phosphate esters may be chosen from condensates of ethylene glycol (meth)acrylate or (poly)ethylene glycol (meth)acrylate with phosphoric acid, more preferably from condensates of ethylene glycol methacrylate or (poly)ethylene glycol methacrylate with phosphoric acid, such as ethylene glycol methacrylate phosphate of formula (III) or (poly)ethylene glycol methacrylate phosphate of formula (IV): 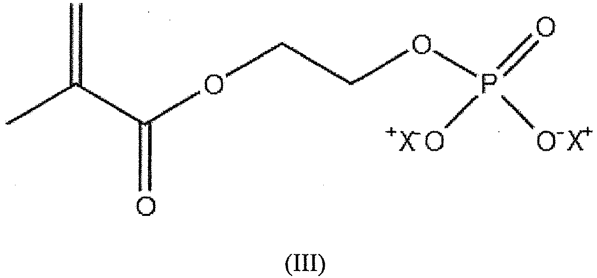 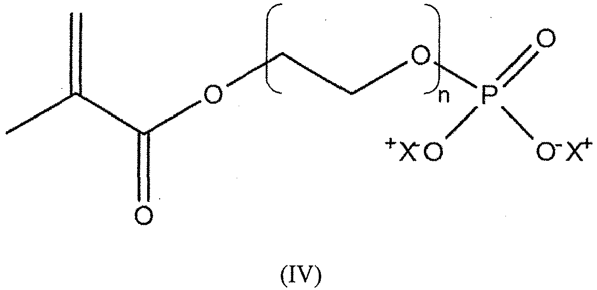 where n can be an integer between 2 and 60, preferably between 3 and 25 and X is any suitable monovalent counter ion, for example an alkali metal cation or an ammonium cation.

The presence of phosphate groups on the surface of the emulsion copolymer comprised in the primer coating will lead to good adhesion between the toner and the primer coating, as well as to improved print quality.

The emulsion copolymerization is carried out preferably in the presence of a surfactant chosen from the group of anionic or nonionic surfactants. Particularly suitable surfactants are nonionic surfactants, which are preferably based on phosphate esters of alkylphenol alkoxylates or alkylphenol poly(alkoxylates) such as for example nonylphenol ethoxylate phosphate ester, octylphenol ethoxylate phosphate ester or 4-(1,1,3,3-tetramethylbutyl)phenol ethoxylate phosphate ester.

The phosphate esters of alkylphenol alkoxylates or alkylphenol poly(alkoxylates) can be chosen from compound according to formula (I) or (II): 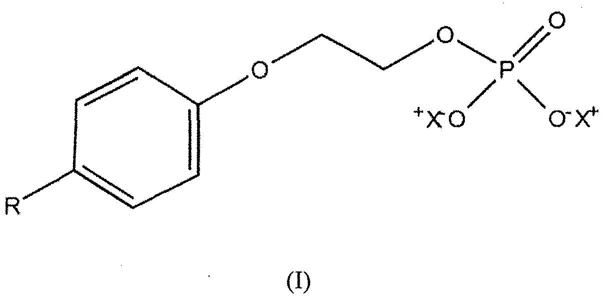 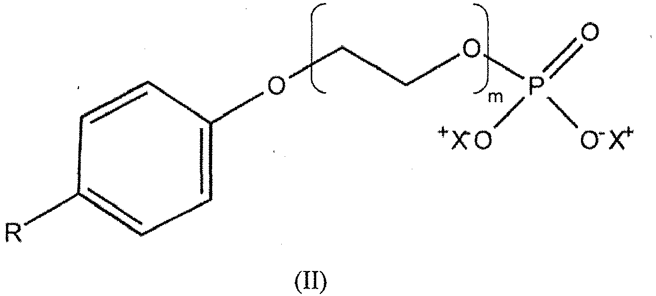 where m can be an integer between 2 and 60 and R can be an linear or branched C4 to C25 alkyl chain, preferably C6 to C10 alkyl chain , and X is any suitable monovalent counter ion, for example an alkali metal cation or an ammonium cation.

The dispersion of the at least partially neutralized copolymer obtained by emulsion copolymerization may have a Brookfield viscosity of from 200 to 330 mPas, preferably of 250 to 280 mPas, when measured at 20°C with spindle #2 at 100 rpm according to ASTM D2196-05.

The at least partially neutralized copolymer obtained by emulsion copolymerisation may have a glass transition temperature T_{g} between 110 und 125°C, preferably between 119 und 124°C, when determined by differential scanning calorimetry, starting from -30°C up to 160°C and back to -30 °C at a rate of 50°C/min.

The at least partially neutralized copolymer thus obtained by emulsion copolymerisation may have a weight average molecular weight of 35000 to 65000, preferably of from 40000 to 60000.

The at least partially neutralized copolymer thus obtained by emulsion copolymerisation may have a density of from 0.8 to 0.9, preferably of from 0.8 to 0.85 g/cm³.

In the primer coating according to the present invention, the copolymer particles may have an average particle diameter of from 100 to 200 nm, preferably of from 150 to 170 nm, when measured with the laser diffraction method. Preferably, more than 95% of the particles have an average particle diameter of from 100 to 200 nm, preferably of from 150 to 170 nm.

The present invention further provides for the use of the primer coating according to the above in a digital printing process, in particular in a digital printing processes using dry or liquid toner technology. Liquid toner technology-based digital printing, which is the most prominent in terms of current market share (80%) is also the more sensitive to adhesion or transfer issues, as well as for dot quality in terms of shape and diameter. Consequently, this technology benefits most from the primer coatings according to the present invention.

The present invention further provides for a print substrate having deposited thereon the aqueous primer coating according to the above. The print substrate may be in the form of a stack or roll of print substrate. When the unprinted substrate having the primer coating applied thereon is stacked or rolled up, the advantageous properties of the primer coating prevent the blocking of adjacent layers of print substrates to each other, even when the primer coating comprises no blocking agent.

The present invention further provides for a method for producing the aqueous primer coating for print substrates comprising the steps of combining at least a dispersion of an at least partially neutralized copolymer of ethylene and (meth)acrylic acid preferably having a solid content of 35%, a dispersion of an at least partially neutralized copolymer obtained by emulsion copolymerization of at least methyl (meth)acrylate and one or more alkenyl phosphate esters, and further optionally one or more comonomers chosen from (meth)acrylic acid and diacetone (meth)acrylamide preferably having a solid content of 29%, and further optionally dispersion of an at least partially neutralized amorphous copolymer of styrene and (meth)acrylic acid preferably having a solid content of 40%. The emulsion copolymerization carried out in the presence of a surfactant chosen from the group of anionic or nonionic surfactants which are preferably based on phosphate esters of alkylphenol alkoxylates or alkylphenol poly(alkoxylates), preferably also in the presence of a chain transfer agent such for example thiol-based chain transfer agents. Non-limiting examples of thiol-based chain transfer agents are 3-mercaptopropionic acid and dodecyl mercaptan, and mixtures of 3-mercaptopropionic acid and dodecyl mercaptane. In particular mixtures 3-mercaptopropionic acid and dodecyl mercaptane can be used to regulate the number average molecular weight of the emulsion copolymer.

The emulsion copolymerization may be carried out at a temperature of from 80 to 120 °C, preferably of 80 to 100 °C, and may be initiated by the addition of catalytic amounts of a radical initiator, such as for example peroxodisulfate radical initiators.

The emulsion copolymerization carried out for 15 to 120 minutes, preferably for about 15 to 45 minutes, starting from the addition of the radical initiator. After this, aqueous basic solution, preferably of ammonia solution or ammonia derivative solution, is added until the pH reaches a basic value, preferably in excess of 7.5 or between 7.5 and 10 and the temperature of the reaction is reduced to about 30°C.

### EXAMPLES

### Preparation of the inventive primer coating

A dispersion D1 of a neutralized copolymer of ethylene and acrylic acid having a melt index of 1300 g/10 min. when measured according to ASTM D1238 at 190°C using a weight of 2.16 kg, a density of 0.955 g/cm³ and an acrylic acid content of 20% was prepared in an autoclave by heating 35 kg of said copolymer to 105 °C in 65 kg of an aqueous solution of ammonia having a pH 8.25. The thus obtained mixture was kept at 105°C and vigorously agitated during 12 hours and then cooled down to 30 °C to form the dispersion of solid polymer particles. The resulting dispersion was then filtered over a 25 micrometres (microns) filter and stored until needed.

A dispersion D2 of a neutralized amorphous copolymer of styrene and acrylic acid was prepared in an autoclave by heating 33 kg of copolymer of ethylene and acrylic acid having a density of 1.1 g/cm³, a molecular weight of 8500, and acid value of 216 and a glass transition temperature T_{g} of 101°C, to 70 °C in an aqueous solution of dimethyl ethanolamine having a pH 8.25. The thus obtained mixture was kept at 70°C and vigorously agitated during 2 hours and then cooled down to 30 °C to form the dispersion of solid polymer particles. The resulting dispersion was then filtered over a 25 micrometres (microns) filter and stored until needed.

A dispersion D3 of neutralized copolymer that is obtained by emulsion copolymerization of methyl methacrylate, ethylene glycol methacrylate phosphate, methacrylic acid, diacetone acrylamide was prepared in an autoclave by heating a predispersion of 22.1 kg methyl methacrylate, 2.63 kg methacrylic acid, 1.5 kg ethylene glycol methacrylate phosphate and 1.5 kg diacetone acrylamide in 60kg of an aqueous solution of ammonia having a pH 8.25 comprising 1.5 kg nonylphenol ethoxylate phosphate ester to 85°C in the presence of 0.4 kg of 3-mercaptopropionic acid and 0.25 kg dodecyl mercaptane.

The thus obtained predispersion is then kept at 85°C and copolymeristaion was initiated by the addition of 0.05 kg of ammonium peroxodisulfate and left to proceed for 30 minutes. After copolymeristaion, aqueous solution of ammonia was added until the pH reached a value of 7.6 and the temperature of the reaction mixture was then lowered to 30°C. The thus obtained aqueous dispersion D3 was filtered over a 100 micrometres filter and 1.75 kg of bactericide (NUOSEPT® BM11) was added.

The thus obtained dispersions D1, D2 and D3 where the combined in a ratio of 54:25:16 to yield and diluted with aqueous solution of ammonia until a primer coating P1 having a solids content of 30% and having pH of 8.75 was obtained.

## Claims

1. A polyurethane-free aqueous primer coating for print substrates comprising
a. a dispersion of an at least partially neutralized copolymer of ethylene and (meth)acrylic acid,
b. a dispersion of an at least partially neutralized copolymer that is obtainable by emulsion copolymerization of at least methyl (meth)acrylate and one or more alkenyl phosphate esters, and further optionally one or more comonomers chosen from (meth)acrylic acid and diacetone (meth)acrylamide.

2. The primer coating according to claim 1, wherein it further comprises
c. a dispersion of an at least partially neutralized amorphous copolymer of styrene and (meth)acrylic acid.

3. The primer coating according to any preceding claim, wherein the copolymer that is obtainable by the emulsion copolymerization is obtainable by emulsion copolymerization of 100 parts by weight of methyl (meth)acrylate and 10 to 15 parts by weight of (meth)acrylic acid; and if any 10 to 15 parts of alkenyl phosphate esters and/or 5 to 8 parts of diacetone (meth)acrylamide.

4. The primer coating according to claims 1 to 3, wherein the at least partially neutralized copolymer that is obtainable by emulsion copolymerisation is obtainable by emulsion copolymerization of at least methyl (meth)acrylate, one or more alkenyl phosphate esters, and one or more comonomers chosen from (meth)acrylic acid and diacetone (meth)acrylamide.

5. The primer coating according to claims 1 to 3, wherein the copolymer is obtainable by the emulsion copolymerization of methyl (meth)acrylate and one or more alkenyl phosphate esters only.

6. The primer coating according to any preceding claim, wherein the copolymer of ethylene and (meth)acrylic acid has a melt index of from 300 to 2000 g/10 min., preferably of from 1000 to 1500 g/10 min., when measured according to ASTM D1238 at 190°C using a weight of 2.16 kg.

7. The primer coating according to any preceding claim, wherein the copolymer of ethylene and (meth)acrylic acid, the copolymer that is obtainable by emulsion copolymerization and if any, the amorphous copolymer of styrene and (meth)acrylic acid, are at least partially neutralized with ammonia or alkylated derivatives thereof.

8. The primer coating according to claim 2 to 7, wherein the amorphous copolymer of styrene and (meth)acrylic acid has an weight average molecular weight of from 7500 to 9500, preferably of from 8000 to 9000.

9. The primer coating according to claim 2 to 8, wherein the copolymer of ethylene and (meth)acrylic acid is present in 50 to 75 weight percent, more preferably in 60 to 70 weight percent in dry weight, the amorphous copolymer of styrene and (meth)acrylic acid in 10 to 30 weight percent, more preferably in 15 to 25 weight percent in dry weight, and the copolymer that is obtainable by emulsion copolymerization in 10 to 30 weight percent, more preferably in 15 to 25 weight percent in dry weight.

10. The primer coating according to any preceding claim, wherein the one or more alkenyl phosphate esters are chosen from condensates of ethylene glycol (meth)acrylate or (poly)ethylene glycol (meth)acrylate with phosphoric acid, more preferably from condensates of ethylene glycol methacrylate or (poly)ethylene glycol methacrylate with phosphoric acid.

11. The primer coating according to any preceding claim, wherein the emulsion polymerization is carried out in the presence of a surfactant chosen from the group of anionic or nonionic surfactants preferably based on phosphate esters of alkylphenol alkoxylates or alkylphenol poly(alkoxylates), more preferably are chosen from nonylphenyl ethoxylate phosphate ester (CAS#52628-03-2), octylphenyl ethoxylate phosphate ester or 4-(1,1,3,3-tetramethylbutyl)phenol ethoxylate phosphate ester.

12. The primer coating according to claim 2 to 11, wherein the least partially neutralized copolymer of ethylene and (meth)acrylic acid is an at least partially neutralized copolymer of ethylene and acrylic acid, the at least partially neutralized amorphous copolymer of styrene and (meth)acrylic acid is an at least partially neutralized amorphous copolymer of styrene and acrylic acid and the copolymer obtainable by emulsion copolymerisation is a copolymer of methyl methacrylate and one or more monomers chosen from methacrylic acid, alkenyl phosphate esters, diacetone acrylamide or combinations thereof.

13. Use of the primer coating according to any preceding claim in digital printing.

14. A print substrate having deposited thereon the aqueous primer coating according to any preceding claim.

15. A method for producing a polyurethane-free aqueous primer coating for print substrates comprising the steps of combining at least
a. a dispersion, of an at least partially neutralized copolymer of ethylene and (meth)acrylic acid having a solid content of 35%,
b. a dispersion of an at least partially neutralized copolymer obtainable by emulsion copolymerization of at least methyl (meth)acrylate and one or more alkenyl phosphate esters, and further optionally one or more comonomers chosen from (meth)acrylic acid and diacetone (meth)acrylamide having a solid content of 29%,
wherein the emulsion copolymerisation carried out in the presence of a surfactant chosen from the group of anionic or nonionic surfactants which are preferably based on phosphate esters of alkylphenol alkoxylates alkylphenol alkoxylates or alkylphenol poly(alkoxylates), and
wherein the emulsion copolymerisation carried out in the presence of 100 parts by weight of methyl (meth)acrylate and 10 to 15 parts of alkenyl phosphate esters, and if any 10 to 15 parts of (meth)acrylic acid and/or 5 to 8 parts of diacetone (meth)acrylamide,
wherein the dispersion further optionally comprises an at least partially neutralized amorphous copolymer of styrene and (meth)acrylic acid having a solid content of 40%,
and preferably wherein the dispersion of an at least partially neutralized copolymer of ethylene and (meth)acrylic acid is a dispersion of an at least partially neutralized copolymer of ethylene and acrylic acid, the dispersion of an at least partially neutralized amorphous copolymer of styrene and (meth)acrylic acid is dispersion of an at least partially neutralized amorphous copolymer of styrene and acrylic acid and the copolymer obtainable by emulsion copolymerization is a copolymer of at least methyl methacrylate and one or more alkenyl phosphate esters, and further optionally one or more comonomers chosen from (meth)acrylic acid and diacetone (meth)acrylamide.

## Patentansprüche

1. Eine polyurethanfreie wässrige Grundbeschichtung für Druckträger, aufweisend
a. eine Dispersion eines mindestens teilweise neutralisierten Copolymers aus Ethylen und (Meth)Acrylsäure,
b. eine Dispersion eines mindestens teilweise neutralisierten Copolymers, welches herstellbar ist durch Emulsions-Copolymerisation von mindestens Methyl(Meth)Acrylsäure und einem oder mehreren Alkenylphosphatestern, und ferner optional einem oder mehreren Comonomeren, ausgewählt aus (Meth)Acrylsäure und Diaceton (Meth)Acrylamid.

2. Grundbeschichtung gemäss Anspruch 1, des Weiteren aufweisend c. eine Dispersion eines mindestens teilweise neutralisierten amorphen Copolymers aus Styren und (Meth)Acrylsäure.

3. Grundbeschichtung gemäss einem der vorhergehenden Ansprüche, wobei das Copolymer, welches durch die Emulsions-Copolymerisation herstellbar ist, durch Emulsions-Copolymerisation von 100 Gewichtsteilen von Methyl(Meth)Acrylsäure und 10 bis 15 Gewichtsteilen von (Meth)Acrylsäure herstellbar ist; und, wenn überhaupt, 10 bis 15 Teilen von Alkenylphosphatestern und/oder 5 bis 8 Teilen von Diaceton(Meth)Acrylamid.

4. Grundbeschichtung gemäss einem der Ansprüche 1 bis 3, wobei das mindestens teilweise neutralisierte Copolymer, welches durch Emulsions-Copolymerisation herstellbar ist, durch Emulsions-Copolymerisation von mindestens Methyl(Meth)Acrylsäure, einem oder mehreren Alkenylphosphatestern, und einem oder mehreren Comonomeren, ausgewählt aus (Meth)Acrylsäure und Diaceton(Meth)Acrylamid herstellbar ist.

5. Grundbeschichtung gemäss einem der Ansprüche 1 bis 3, wobei das Copolymer durch die Emulsions-Copolymerisation von nur Methyl(Meth)Acrylsäure und einem oder mehreren Alkenylphosphatestern herstellbar ist.

6. Grundbeschichtung gemäss einem der vorhergehenden Ansprüche, wobei das Copolymer aus Ethylen und (Meth)Acrylsäure einen Schmelzindex von 300 bis 2000 g/10 min. hat, vorzugsweise von 1000 bis 1500 g/10 min., wenn gemäss ASTM D1238 bei 190°C unter Verwendung eines Gewichts von 2.16 kg gemessen wird.

7. Grundbeschichtung gemäss einem der vorhergehenden Ansprüche, wobei das Copolymer von Ethylen und (Meth)Acrylsäure, das Copolymer, welches durch Emulsions-Copolymerisation herstellbar ist, und, falls überhaupt, das amorphe Copolymer aus Styren und (Meth)Acrylsäure, mindestens teilweise mit Ammoniak oder alkylierten Derivaten davon neutralisiert sind.

8. Grundbeschichtung gemäss einem der Ansprüche 2 bis 7, wobei das amorphe Copolymer aus Styren und (Meth)Acrylsäure ein durchschnittliches Molekulargewicht von 7500 bis 9500 hat, vorzugsweise von 8000 bis 9000.

9. Grundbeschichtung gemäss einem der Ansprüche 2 bis 8, wobei das Copolymer aus Ethylen und (Meth)Acrylsäure zu 50 bis 75 Gewichtsprozent enthalten ist, vorzugsweise zu 60 bis 70 Gewichtsprozent an Trockengewicht, wobei das amorphe Copolymer aus Styren und (Meth)Acrylsäure zu 10 bis 30 Gewichtsprozent, vorzugsweise zu 15 bis 25 Gewichtsprozent an Trockengewicht enthalten ist, und wobei das Copolymer, welches durch Emulsions-Copolymerisation herstellbar ist, zu 10 bis 30 Gewichtsprozent, vorzugsweise zu 15 bis 25 Gewichtsprozent an Trockengewicht enthalten ist.

10. Grundbeschichtung gemäss einem der vorhergehenden Ansprüche, wobei der eine oder mehrere Alkenylphosphatester ausgewählt sind aus Kondensaten von Ethylenglykol(Meth)Acrylsäure oder (Poly)Ethylenglykol(Meth)Acrylsäure mit Phosphorsäure, vorzugsweise aus Kondensaten von Ethylenglykolmethacrylsäure oder (Poly)Ethylenglykolmethacrylsäure mit Phosphorsäure.

11. Grundbeschichtung gemäss einem der vorhergehenden Ansprüche, wobei die Emulsions-Polymerisation ausgeführt wird unter Anwesenheit eines Tensids, ausgewählt aus der Gruppe von anionischen oder nicht-ionischen Tensiden, vorzugsweise basierend auf Phosphatestern von Alkylphenol-Alkoxylaten oder Alkylphenol-Poly(Alkoxylaten), insbesondere bevorzugt ausgewählt aus Nonylphenyl-Ethoxylat-Phosphatester (CAS#52628-03-2), Octylphenyl-Ethoxylat-Phosphatester oder 4-(1,1,3,3-Tetramethylbutyl)Phenol-Ethoxylat-Phosphatester.

12. Grundbeschichtung gemäss einem der Ansprüche 2 bis 11, wobei das mindestens teilweise neutralisierte Copolymer aus Ethylen und (Meth)Acrylsäure ein mindestens teilweise neutralisiertes Copolymer aus Ethylen und Acrylsäure ist, wobei das mindestens teilweise neutralisierte amorphe Copolymer aus Styren und (Meth)Acrylsäure ein mindestens teilweise neutralisiertes amorphes Copolymer aus Styren und Acrylsäure ist, und wobei das Copolymer, welches durch Emulsions-Copolymerisation herstellbar ist, ein Copolymer aus Methyl-Methacrylat und einem oder mehrerer Monomere, ausgewählt aus Methacrylsäure, Alkenylphhosphatestern, Diaceton-Acrylamid oder Kombinationen davon, ist.

13. Verwendung der Grundbeschichtung gemäss einem der vorhergehenden Ansprüche beim Digitaldruck.

14. Druckträger, aufweisend darauf aufgetragen die wässrige Grundbeschichtung gemäss einem der vorhergehenden Ansprüche.

15. Verfahren zur Herstellung einer polyurethanfreien wässrigen Grundbeschichtung für Druckträger, aufweisend die Schritte des Kombinierens von mindestens
a. einer Dispersion eines mindestens teilweise neutralisierten Copolymers aus Ethylen und (Meth)Acrylsäure, mit einem Feststoffanteil von 35%,
b. einer Dispersion eines mindestens teilweise neutralisierten Copolymers, welches herstellbar ist durch Emulsions-Copolymerisation von mindestens Methyl(Meth)Acrylsäure und einem oder mehreren Alkenyl-Phosphatestern, und des Weiteren optional einem oder mehreren Comonomeren, ausgewählt aus (Meth)Acrylsäure und Diaceton(Meth)Acrylamid mit einem Feststoffgehalt von 29%,
wobei die Emulsions-Copolymerisation ausgeführt wird in der Anwesenheit eines Tensids, ausgewählt aus der Gruppe von anionischen oder nicht-ionischen Tensiden, welche vorzugsweise auf Phosphatestern von Alkylphenol-Alkoxylaten, Alkylphenol-Alkoxylaten, oder Alkylphenol-Poly(Alkoxylaten) basieren, und
wobei die Emulsions-Copolymerisation ausgeführt wird in der Anwesenheit von 100 Gewichtsteilen von Methyl(Meth)Acrylsäure und 10 bis 15 Teilen von Alkenylphosphatestern, und, wenn überhaupt, 10 bis 15 Teilen von (Meth)Acrylsäure und/oder 5 bis 8 Teilen von Diaceton(Meth)Acrylamid, wobei die Dispersion des Weiteren optional ein mindestens teilweise neutralisiertes amorphes Copolymer aus Styren und (Meth)Acrylsäure mit einem Feststoffgehalt von 40% aufweist,
und wobei vorzugsweise die Dispersion eines mindestens teilweise neutralisierten Copolymers aus Ethylen und (Meth)Acrylsäure eine Dispersion aus mindestens einem teilweise neutralisierten Copolymer aus Ethylen und Acrylsäure ist, wobei die Dispersion eines mindestens teilweise neutralisierten amorphen Copolymers aus Styren und (Meth)Acrylsäure eine Dispersion aus einem mindestens teilweise neutralisierten amorphen Copolymer aus Styren und Acrylsäure ist, und wobei das Copolymer, welches durch Emulsions-Copolymerisation herstellbar ist, ein Copolymer aus mindestens Methylmethacrylat und einem oder mehreren Alkenylphosphatestern ist, und ferner optional einem oder mehreren Comonomeren, ausgewählt aus (Meth)Acrylsäure und Diaceton(Meth)Acrylamid.

## Revendications

1. Un revêtement d'apprêt aqueux libre de polyuréthane pour substrats d'impression comprenant
a. une dispersion de copolymère au moins partiellement neutralisé d'éthylène et d'acide (méth)acrylique,
b. une dispersion de copolymère au moins partiellement neutralisé pouvant être obtenu par copolymérisation en émulsion d'au moins (méth)acrylate de méthyle et d'un ou de plusieurs esters de phosphate d'alcényle et en outre éventuellement d'un ou de plusieurs comonomères choisis parmi l'acide (méth)acrylique et le diacétone (méth)acrylamide.

2. Le revêtement d'apprêt selon la revendication 1, dans lequel celui-ci comprend en outre
c. une dispersion d'un copolymère amorphe au moins partiellement neutralisé de styrène et d'acide (méth)acrylique.

3. Le revêtement d'apprêt selon l'une quelconque des revendications précédentes, dans lequel le copolymère pouvant être obtenu par copolymérisation en émulsion peut être obtenu par copolymérisation en émulsion de 100 parties en poids de (méth)acrylate de méthyle et 10 à 15 parties en poids d'acide (méth)acrylique; et si présent, 10 à 15 parties d'ester de phosphate d'alcényle et / ou 5 à 8 parties de diacétone (méth)acrylamide.

4. Le revêtement d'apprêt selon les revendications 1 à 3, dans lequel le copolymère au moins partiellement neutralisé pouvant être obtenu par copolymérisation en émulsion peut être obtenu par copolymérisation en émulsion d'au moins (méth)acrylate de méthyle, un ou plusieurs d'esters de phosphate d'alcényle, et un ou plusieurs comonomères choisis parmi l'acide (méth)acrylique et diacétone (méth)acrylamide.

5. Le revêtement d'apprêt selon les revendications 1 à 3, dans lequel le copolymère peut être obtenu par copolymérisation en émulsion de (méth)acrylate de méthyle et un ou plusieurs esters de phosphate d'alcényle uniquement.

6. Le revêtement d'apprêt selon l'une quelconque des revendications précédentes, dans lequel le copolymère d'éthylène et d'acide (méth)acrylique a un indice de fusion de 300 à 2000 g / 10 min., préférablement de 1000 à 1500 g / 10 min, quand il est mesuré selon ASTM D1238 à 190 ° C en utilisant un poids de 2,16 kg.

7. Le revêtement d'apprêt selon l'une quelconque des revendications précédentes, dans lequel le copolymère d'éthylène et d'acide (méth)acrylique, le copolymère pouvant être obtenu par copolymérisation en émulsion, et si présent, le copolymère amorphe de styrène et d'acide (méth)acrylique, sont au moins partiellement neutralisés avec de l'ammoniac ou avec un dérivé alkylé de celui-ci.

8. Le revêtement d'apprêt selon les revendications 2 à 7, dans lequel le copolymère amorphe de styrène et d'acide (méth)acrylique a une poids moléculaire moyen en poids de 7500 à 9500, préférablement de 8000 à 9000.

9. Le revêtement d'apprêt selon les revendications 2 à 8, dans lequel le copolymère d'éthylène et d'acide (méth)acrylique est présent de 50 à 75 pourcent en poids, plus préférablement en 60 à 70 pourcent en poids, en poids sec, le copolymère amorphe de styrène et d'acide (méth)acrylique de 10 à 30 pourcent en poids, plus préférablement de 15 à 25 pourcent en poids, en poids sec, et le copolymère pouvant être obtenu par copolymérisation en émulsion de 10 à 30 pourcent en poids, plus préférablement de 15 à 25 pourcent en poids, en poids sec.

10. Le revêtement d'apprêt selon l'une quelconque des revendications précédentes, dans lequel l'un ou plusieurs esters de phosphate d'alcényle sont choisis parmi les condensés de (méth)acrylate d'éthylène glycol ou (méth)acrylate de (poly)éthylène glycol avec l'acide phosphorique, plus préférablement parmi les condensés de méthacrylate d'éthylène glycol ou méthacrylate de (poly)éthylène glycol avec l'acide phosphorique.

11. Le revêtement d'apprêt selon l'une quelconque des revendications précédentes, dans lequel la polymérisation en émulsion est effectuée en présence d'un tensioactif choisi du groupe des tensioactifs anioniques ou non-ioniques, préférablement à base d'esters de phosphate d'alcoxylates d'alkylphénol ou de (poly)alcoxylates d'alkylphénol, plus préférablement sont choisi parmi l'ester de phosphate d'éthoxylate de nonylphényl (CAS # 52628-03-2), l'ester de phosphate d'éthoxylate d'octylphényl ou l'ester de phophate d'éthoxylate de 4- (1,1,3,3-tétraméthylbutyl) phénol.

12. Le revêtement d'apprêt selon les revendications 2 à 11, dans lequel le copolymère au moins partiellement neutralisé d'éthylène et acide (méth)acrylique est un copolymère au moins partiellement neutralisé d'éthylène et d'acide acrylique, le copolymère amorphe au moins partiellement neutralisé de styrène et d'acide (méth)acrylique est un copolymère amorphe au moins partiellement neutralisé de styrène et d'acide acrylique et le copolymère pouvant être obtenu par copolymérisation en émulsion est un copolymère de méthacrylate de méthyle et un ou de plusieurs monomères choisis parmi l'acide méthacrylique, les esters de phosphate d'alcényle, de diacétone acrylamide ou de combinaisons de ceux-ci.

13. Utilisation de revêtement d'apprêt selon l'une quelconque des revendications précédentes en impression numérique.

14. Un support d'impression ayant déposé sur celui-ci un revêtement d'apprêt aqueux selon l'une quelconque des revendications précédentes.

15. Un procédé pour la production d'un revêtement d'apprêt aqueux libre de polyuréthane pour substrats d'impression, comprenant les étapes de combiner au moins
a. une dispersion d'un copolymère au moins partiellement neutralisé d'éthylène et d'acide (méth)acrylique ayant un contenu en solides de 35%,,
b. une dispersion de copolymère au moins partiellement neutralisé pouvant être obtenu par copolymérisation en émulsion d'au moins (méth)acrylate de méthyle et d'un ou de plusieurs esters de phosphate d'alcényle et en outre éventuellement d'un ou de plusieurs comonomères choisis parmi l'acide (méth)acrylique et le diacétone (méth)acrylamide ayant un contenu en solides de 95%,
dans lequel la copolymérisation en émulsion est effectuée en présence d'un tensioactif choisi parmi le groupe de tensioactifs anioniques ou non-ioniques qui sont préférablement à base d'esters de phosphate de alkyl d'alcoxylates d'alkyphenol ou alkyl de (poly)alcoxylates d'alkyphenol, et
dans lequel la copolymérisation en émulsion est effectuée en présence de 100 parties en poids de (méth)acrylate de méthyle et 10 à 15 parties d'esters de phosphate d'alcényle, et si présent, 10 à 15 parties d'acide (méth)acrylique et / ou 5 à 8 parties de diacétone (méth)acrylamide,
dans lequel la dispersion comprenant en outre éventuellement un copolymère amorphe au moins partiellement neutralisé de styrène et d'acide (méth)acrylique ayant un contenu en solides de 40%,
et préférablement, dans lequel la dispersion d'un copolymère au moins partiellement neutralisé d'éthylène et d'acide (méth)acrylique est une dispersion d'un copolymère au moins partiellement neutralisé d'éthylène et acide acrylique, la dispersion d'un copolymère amorphe au moins partiellement neutralisé de styrène et d'acide (méth)acrylique est une dispersion d'au moins un copolymère amorphe au moins partiellement neutralisé de styrène et d'acide acrylique, et le copolymère pouvant être obtenu par copolymérisation en émulsion est un copolymère d'au moins méthacrylate de méthyle et un ou plusieurs esters de phosphate d'alcényle, et en outre éventuellement un ou plusieurs comonomères choisis parmi l'acide (méth)acrylique et le diacétone (méth)acrylamide.
